# DEMANDE DE BREVET EUROPEEN

(11) **EP 4 056 083 A1**
(43) Date de publication de la demande: **14.09.2022**
(21) Numéro de dépôt: 22160184.2
(22) Date de dépôt: 04.03.2022
(51) Int. Cl.: A47J 47/02, B65D 43/02, B65D 81/34

(54) **COUVERCLE EN VERRE POUR BOÎTE DE CONSERVATION A USAGE ALIMENTAIRE**

(30) Priorité: 09.03.2021 FR 2102285
(71) Demandeur: International Cookware, 36000 Châteauroux (FR)
(72) Inventeur: DE OLIVEIRA, Alvaro, 36000 Châteauroux (FR)
(74) Mandataire: Cabinet Netter

(57) **Abrégé**

Un accessoire culinaire comprend un couvercle en verre (5) généralement plat et présentant une portion périphérique (13) avec un bord de couvercle et un joint circonférentiel (25) souple. Ce joint comporte une portion d'engagement (29) chaussée sur une partie de la portion périphérique (13) voisine du bord et une lèvre d'étanchéité (33) apte à coopérer avec la paroi latérale (9) d'un récipient de base (3) quand le couvercle (5) repose sur un bord supérieur (11) de ce récipient (3) par l'intermédiaire de la portion périphérique (13). Le couvercle (5) présente en outre une portion d'emboîtement (17) en saillie de la portion périphérique (13). La lèvre d'étanchéité (33) est agencée comme extrémité d'une portion active (31) du joint circonférentiel (25). Une portion intermédiaire (37) de ce joint circonférentiel (25), reliant la portion active (31) à la portion d'engagement (29), est conformée de manière à épouser l'emboîtement (17).

## Description

L'invention a trait à un accessoire culinaire du type comprenant un couvercle en verre généralement plat muni d'une portion périphérique avec un bord de couvercle et un joint circonférentiel souple comprenant une portion d'engagement chaussée sur une partie de la portion périphérique du couvercle voisine du bord, le joint circonférentiel présentant une lèvre d'étanchéité apte à coopérer avec la paroi latérale d'un récipient de base quand le couvercle repose sur un bord supérieur de ce récipient de base par l'intermédiaire de la portion périphérique.

On connaît depuis longtemps des boîtes de conservation à usage alimentaire, constituées d'un récipient de base et d'un couvercle apte à s'engager de manière hermétique sur le bord supérieur du récipient. Les boîtes de ce type sont largement utilisées, en particulier pour conserver des aliments, préparations, restes et autres, notamment au réfrigérateur.

À l'origine de leur développement commercial, ces boîtes sont constituées d'un récipient de base et d'un couvercle réalisés tous deux en matière plastique : le couvercle présente une rainure circonférentielle en correspondance de forme avec le bord supérieur du récipient. La souplesse du couvercle et, dans une moindre mesure, celle du récipient, permettent d'engager et de désengager le couvercle du récipient.

Avec le temps, on a vu apparaître des boîtes d'un genre nouveau, dont le récipient de base est réalisé en verre, en particulier en verre borosilicate, et le couvercle en matière plastique. Un récipient en verre offre pratiquement les mêmes possibilités d'usage qu'un récipient en matière plastique : il peut être placé au réfrigérateur et supporte le réchauffage au four à micro-ondes. Par rapport à un récipient en matière plastique, la base en verre supporte le passage au four traditionnel. Cette base résiste également mieux au vieillissement et au lave-vaisselle.

Pour assurer l'herméticité nécessaire à une conservation satisfaisante des aliments, le couvercle des boîtes en question est généralement équipé d'un joint circonférentiel souple.

Il peut s'agir d'un joint torique, ou de section carrée ou rectangulaire, monté dans une rainure du couvercle et qui vient s'appuyer contre le bord supérieur du récipient de base lorsque le couvercle est en place sur ce récipient.

Pour être efficace, ce joint doit être comprimé entre le couvercle et le bord du récipient. La compression résulte généralement de l'action de clapets, solidaires du couvercle en matière plastique, qui viennent s'engager sous un rebord du récipient.

Dans ce contexte, la Demanderesse a proposé, dans FR 3 070 587 A1, un couvercle en matière plastique, équipé d'un joint circonférentiel doté d'une lèvre d'étanchéité qui vient coopérer avec la paroi latérale du récipient sur lequel repose le couvercle, à proximité du bord supérieur de ce récipient.

Il existe actuellement une tendance, particulièrement dans le domaine des arts culinaires, à laquelle la Demanderesse participe, selon laquelle on cherche à remplacer les matériaux plastiques par du verre. Cette tendance s'exprime plus particulièrement encore dans le cas de la conservation d'aliments et/ou de la cuisson et du réchauffage.

On en est ainsi venu à réaliser des boîtes de conservation à usage alimentaire dont le couvercle est lui aussi en verre, du moins pour l'essentiel.

Là où l'injection de matière plastique permet de réaliser des couvercles de formes complexes, doués d'une certaine élasticité et avec de faibles dispersions dimensionnelles, la mise en forme du verre est plus complexe, impose des formes plus simples et produit des pièces rigides avec, pour certains procédés du moins, des dispersions dimensionnelles importantes.

Cela oblige à repenser l'herméticité de l'assemblage du couvercle au récipient de base.

La société Lock & Lock par exemple propose une gamme de boîtes de conservation à usage alimentaire connue sous le nom de "Line", comportant les produits référencés LLG950, LLG951 et LLG952, dont le couvercle et le récipient de base sont tous les deux en verre. Le récipient de base est carré. La boîte comprend un joint circonférentiel avec une portion d'engagement qui se monte autour d'un bord périphérique du couvercle. Cette portion d'engagement se prolonge par une portion libre, qui s'étend à distance de l'emboîtement du couvercle, de manière essentiellement cylindrique et droite. À la surface extérieure de cette portion cylindrique, une lèvre d'étanchéité fait saillie, perpendiculairement. La lèvre en question se trouve à distance de l'extrémité du joint éloignée de sa portion d'engagement.

Pour qu'à la mise en place du couvercle sur le récipient de base, le joint soit efficacement contraint, la dépouille (inclinaison) de la paroi latérale du récipient est réduite. Cette paroi latérale doit s'adapter à un joint qui s'étend essentiellement de manière verticale. De ce fait, le récipient de base tolère assez peu les dispersions dimensionnelles. Il en résulte une complexité de fabrication qui s'accompagne de coûts élevés.

L'ergonomie de ces boîtes n'est pas satisfaisante : il faut forcer sur le couvercle pour mettre celui-ci en place sur le récipient de base et, à nouveau, lorsqu'il s'agit de le retirer. Cela augmente en outre le risque d'une manipulation maladroite. Malgré cela, aucun effet "ventouse" ne se fait sentir, en sorte que l'utilisateur peut douter de l'herméticité de l'assemblage mutuel du couvercle et de la base.

La société Ikea propose également des boîtes de conservation à usage alimentaire, connue sous le nom de "Ikea 365+". Le couvercle de ces boîtes est en verre et le joint en silicone. Ce joint est annulaire et se monte autour de l'emboîtement du couvercle, dans un ajustement serré avec celui-ci. La lèvre est recourbée vers le haut. Pour assurer le maintien du joint sur le couvercle, l'emboîtement présente un contre-dépouille qui s'oppose au retrait du joint. Cette configuration du couvercle impose un processus de mise en forme particulier, qui fait appel à des moules à tiroir pour conformer la contre-dépouille. Il en résulte un processus coûteux, lourds en investissement et dont le rendement productif est moindre que les procédés classiques de verre pressé. En outre, cette technique est particulièrement complexe pour des formes rectangulaires de taille moyenne ou grande (dimension en largeur et/ou longueur supérieure à 200 millimètres).

La Demanderesse s'est ainsi fixé comme objectif d'améliorer la situation.

On propose un accessoire culinaire du type comprenant un couvercle en verre généralement plat présentant une portion périphérique avec un bord de couvercle et un joint circonférentiel souple. Le joint circonférentiel comprend une portion d'engagement chaussée sur une partie de la portion périphérique du couvercle voisine du bord. Le joint circonférentiel présente une lèvre d'étanchéité apte à coopérer avec la paroi latérale d'un récipient de base quand le couvercle repose sur un bord supérieur de ce récipient de base par l'intermédiaire de la portion périphérique. Le couvercle présente en outre une portion d'emboîtement en saillie de la portion périphérique et la lèvre d'étanchéité est agencée comme extrémité d'une portion active du joint circonférentiel. Une portion intermédiaire de ce joint circonférentiel, reliant la portion active à la portion d'engagement, est conformée de manière à épouser l'emboîtement.

L'accessoire proposé se monte sur un récipient de base de manière pratiquement hermétique, y compris en cas d'importantes dispersions dimensionnelles, comme ce peut être le cas dans la technique du verre pressé. Dans cet accessoire, l'usage de matériaux synthétiques est considérablement réduit, seul le joint circonférentiel étant réalisé en un matériau autre que le verre.

La configuration du joint est telle que le contact de la lèvre d'étanchéité avec la paroi latérale du récipient se fait assez profondément. La lèvre pivote relativement au reste du joint à la mise en place du couvercle sur le récipient de base. Il en résulte une lèvre plus efficace. Le joint est amovible, ce qui permet d'utiliser le couvercle seul dans des conditions de température supérieures à ce qu'autorise l'usage du silicone.

L'accessoire offre une meilleure ergonomie. On n'a pas à forcer à la mise en place du couvercle sur le récipient, ni lors de son retrait.

Le couvercle peut être moulé/pressé avec sa face inférieure dans le moule, ce qui permet d'obtenir la moindre dispersion sur les portions du couvercle en contact avec le joint.

On propose également un kit formant accessoire culinaire du type comprenant un couvercle en verre généralement plat muni d'une portion périphérique avec un bord de couvercle et un joint circonférentiel souple. Ce joint circonférentiel comprend une portion d'engagement qui se chausse sur une partie de la portion périphérique du couvercle voisine du bord. Le joint circonférentiel présente une lèvre d'étanchéité apte à coopérer avec la paroi latérale d'un récipient de base quand le couvercle repose sur un bord supérieur de ce récipient de base par l'intermédiaire de la portion périphérique. Le couvercle présente en outre une portion d'emboîtement en saillie de la portion périphérique. La lèvre d'étanchéité est agencée comme extrémité d'une portion active du joint circonférentiel. Une portion intermédiaire de ce joint circonférentiel, reliant la portion active à la portion d'engagement, est conformée de manière à épouser l'emboîtement.

On propose encore une boîte de conservation à usage alimentaire du type comprenant un récipient de base avec une paroi latérale et un bord supérieur ainsi qu'un couvercle en verre généralement plat muni d'une portion périphérique avec un bord de couvercle et un joint circonférentiel souple. Ce joint circonférentiel comprend une portion d'engagement chaussée sur une partie de la portion périphérique du couvercle voisine du bord. Le joint circonférentiel présente une lèvre d'étanchéité apte à coopérer avec la paroi latérale du récipient de base quand le couvercle repose sur le bord supérieur de ce récipient de base par l'intermédiaire de la portion périphérique. Le couvercle présente en outre une portion d'emboîtement en saillie de la portion périphérique. La lèvre d'étanchéité est agencée comme extrémité d'une portion active du joint circonférentiel. Une portion intermédiaire de ce joint circonférentiel, reliant la portion active à la portion d'engagement, est conformée de manière à épouser l'emboîtement.

Des caractéristiques optionnelles de l'invention, complémentaires ou de substitution, sont énoncées ci-après :
- L'emboîtement présente un profil généralement concave et la portion intermédiaire du joint circonférentiel présente au moins une partie en correspondance de forme avec le profil de l'emboîtement.
- La portion active du joint circonférentiel est libre tandis que sa portion intermédiaire est en contact serré avec l'emboîtement.
- Le couvercle présente une portion centrale munie, sur une face inférieure du couvercle, d'au moins un rebord périphérique qui se raccorde à la portion d'emboîtement tandis que la portion intermédiaire du joint circonférentiel est en partie au moins en correspondance de forme avec ce rebord périphérique.
- Le rebord périphérique est conformé en un bossage qui fait saillie de la portion centrale du couvercle et la portion intermédiaire du joint circonférentiel est en correspondance de forme avec ce bossage au moins jusqu'à un sommet de celui-ci.
- La lèvre d'étanchéité se raccorde à la portion intermédiaire par une portion arquée qui éloigne la lèvre d'étanchéité de l'emboîtement.
- Le joint circonférentiel présente au moins une portion à fonction d'évent en tant que déformation locale d'un profil de la lèvre d'étanchéité.
- Le joint circonférentiel présente, par parties au moins, une texture rugueuse, en particulier un grain de type Charmille.
- La lèvre présente une texture rugueuse, en particulier de grain Charmille 38.
- Au voisinage du bord du couvercle au moins, la portion périphérique dépasse en hauteur le reste du couvercle ou se trouve au niveau de celui-ci.
- Le bord du couvercle déborde de la paroi latérale du récipient de base, au moins au voisinage de son bord supérieur lorsque le couvercle repose sur ce bord supérieur par l'intermédiaire de la portion périphérique.

D'autres caractéristiques et avantages de l'invention sont exposés en détail dans la description ci-après, faite en référence aux dessins annexés, sur lesquels :
- la figure 1 représente une boîte de conservation selon l'invention, en vue de dessus ;
- la figure 2 représente la boîte de la figure 1, en coupe selon la ligne II-II ;
- la figure 3 représente un joint pour la boîte de la figure 1, vu en perspective isométrique ;
- la figure 4 représente le joint de la figure 3, en vue de dessus ;
- la figure 5 représente le joint de la figure 4, en coupe selon une ligne V-V ;
- la figure 6 représente le joint de la figure 4, en coupe selon une ligne VI-VI ;
- la figure 7 représente un détail VII de la boîte de la figure 2 ;
- la figure 8 représente un détail VIII de la boîte de la figure 2, sans sa base ;
- la figure 9 représente le joint de la figure 4, en coupe selon une ligne IX-IX ;
- la figure 10 représente le joint de la figure 4, en coupe selon une ligne X-X ;
- la figure 11 représente un détail XI du joint de la figure 4, vu en perspective ;
- la figure 12 représente la boîte selon l'invention dans une vue analogue à la figure 2.

Les dessins annexés contiennent, pour l'essentiel, des éléments de caractère certain. Ils pourront donc non seulement servir à mieux faire comprendre la présente invention, mais aussi contribuer à sa définition, le cas échéant.

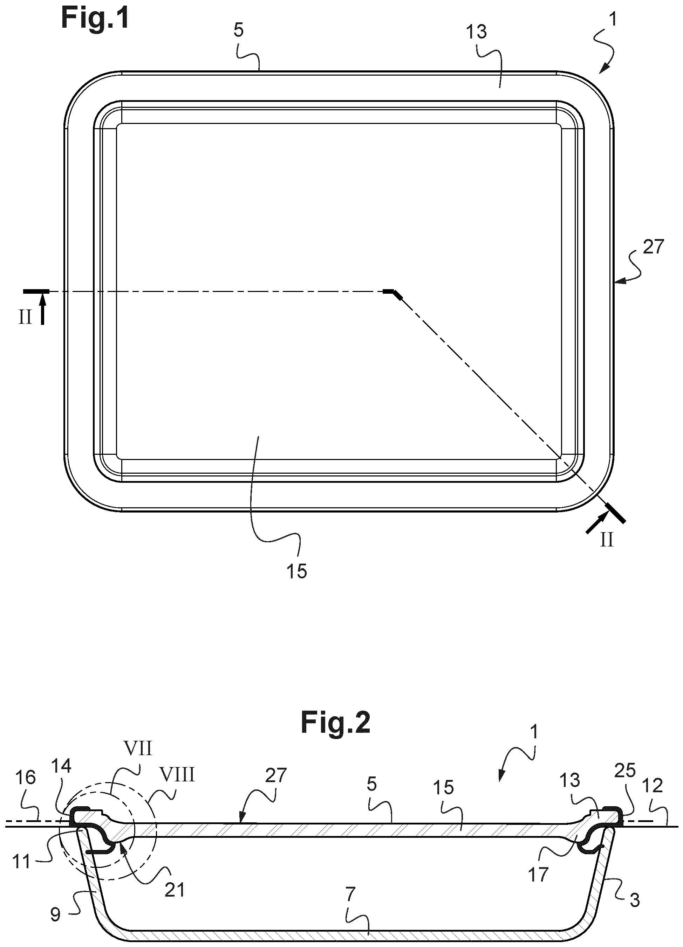

On fait référence aux figures 1 et 2.

Une boîte de conservation 1, à usage alimentaire, comprend une base 3 en forme de récipient et un couvercle 5 capable de couvrir la base 3 pour fermer la boîte 1, comme cela est représenté sur les figures 1 et 2. Le couvercle 5 au moins est réalisé pour l'essentiel en verre, en particulier en verre borosilicate. De préférence, il en est de même de la base 3. Le couvercle 5 et la base 3 sont réalisés chacun d'un seul tenant, en particulier par moulage/pressage. En variante, le couvercle 5 ou la base 3 peuvent être en verre sodo-calcique.

Ici, la base 3 est conformée en un plat à four, ou à rôtir. La base 3 peut ainsi être utilisée seule, en particulier pour cuire au four traditionnel. En variante, la base 3 peut prendre la forme d'un pot, d'un bol, d'un bocal ou analogue.

La base 3 présente une première face, ou face inférieure, agencée de manière connue pour offrir à la base 3 une surface par laquelle reposer sur une surface plane. La base 3 présente une seconde face, opposée à la première selon une hauteur de la base 3, ou face supérieure. Cette face supérieure est ouverte sur l'intérieur du récipient.

La base 3 présente une portion formant un fond de récipient 7. Ce fond 7 occupe l'essentiel de la face inférieure de la base 3. Il s'agit ici d'un fond plat, pour l'essentiel au moins.

La base 3 comprend en outre une portion conformée en une paroi latérale 9, laquelle borde le fond 7. En une extrémité inférieure, la paroi 9 se raccorde au fond 7. Une extrémité supérieure de cette paroi 9 est libre et forme un bord périphérique 11 du récipient, aussi appelé "débouché de forme" dans la technique. Ce bord 11 délimite un premier plan 12, généralement perpendiculaire à la hauteur de la base 3. Ici, ce premier plan 12 correspond au plan le plus supérieur de la base 3.

La paroi 9 suit le contour du fond 7. La paroi 9 s'élève depuis ce fond 7 en s'évasant vers l'extérieur du récipient, ici de manière généralement rectiligne.

Le bord 11 de la base 3 présente un profil bombé vers le haut du récipient, ici généralement arrondi. Le sommet du bord 11 appartient au premier plan 12. En variante, le bord 11 pourrait être plat et/ou muni, au moins localement, d'un rebord, en particulier en retrait par rapport au bords 11 ou son sommet.

Dans l'exemple représenté ici, la base 3 est dite généralement rectangulaire, c'est-à-dire que son fond 7 présente un contour d'allure rectangulaire. En variante, la base 3 peut être généralement circulaire, carrée ou ovoïde, et plus généralement de forme plane quelconque.

Le couvercle 5 est généralement plat. Ce couvercle 5 présente une forme correspondant à la forme de la base 3. Ici, le couvercle 5 est rectangulaire, comme la base 3.

Le couvercle 5 comporte une face inférieure par l'intermédiaire de laquelle le couvercle 5 peut recouvrir la face supérieure de la base 3 et une face supérieure, opposée à la face inférieure selon une hauteur du couvercle 5. La face inférieure du couvercle 5 repose alors sur le bord 11.

Le couvercle 5 présente une portion périphérique 13 qui se termine en un bord droit 14 et entoure une portion centrale 15 du couvercle 5. Cette portion centrale 15 présente une surface supérieure conformée en une cuvette, ouverte sur la face supérieure du couvercle 5 et en creux par rapport à une surface supérieure de la portion périphérique 13. Ici, cette surface supérieure de la portion périphérique 13 est plane et généralement perpendiculaire à la hauteur du couvercle 5. La surface supérieure de la portion périphérique 13 correspond à la surface la plus supérieure du couvercle 5. Au voisinage du bord 14 du couvercle 5 au moins, la portion périphérique 13 dépasse en hauteur le reste du couvercle 5 ou se trouve au niveau de celui-ci.

La portion périphérique 13 du couvercle 5 présente une surface inférieure généralement plane et perpendiculaire à la hauteur du couvercle 5. Cette surface inférieure s'étend dans un second plan 16, parallèle à un plan principal du couvercle 5. Cette surface inférieure du bord 13 repose sur le bord 11 de la base 3 quand le couvercle 5 est en place sur la base 3. La portion périphérique 13 s'étend alors au-delà de la paroi latérale 9 de la base 3. Le bord 14 du couvercle 5 fait saillie de cette paroi latérale 9, du moins au voisinage du bords supérieur 11. Il en résulte une capacité de préhension améliorée du couvercle 5, laquelle facilite le retrait du couvercle 5 de la base 3. Ce dépassement est ici de l'ordre de 2 millimètres sur tout le pourtour du couvercle 5. De préférence, ce dépassement est compris entre 1 et 3 millimètres environ.

Sur sa face inférieure, le couvercle 5 est conformé en une portion d'emboîtement 17, qui fait saillie vers le bas de la surface inférieure de la portion périphérique 13 du couvercle 5, ou du second plan 16. Sur cette face inférieure, l'emboîtement 17 raccorde la portion périphérique 13 à la portion centrale 15 du couvercle 5. Dans la technique, on désigne "emboîtement" la partie d'un couvercle de récipient qui se projette à l'intérieur de ce récipient et se trouve en regard de sa paroi latérale. L'emboîtement vient buter contre cette paroi latérale en empêchant le couvercle de traverser le débouché du récipient.

L'emboîtement 17 s'étend suivant un contour qui suit le contour du bord 11 de la base 3. L'emboîtement 17 présente un profil généralement concave, ici arrondi.

Sur la face inférieure du couvercle 5, la portion centrale 15 de celui-ci présente un rebord 21 qui fait saillie vers le bas du reste de la surface inférieure de la portion centrale 15. Le rebord 21 est conformé en un bossage qui fait le tour de la partie centrale 15. L'emboîtement 17 se raccorde au rebord 21 de manière continue. Le bossage du rebord 21 présente un profil bombé vers le bas, ici arrondi.

La surface inférieure de la portion centrale 15 du couvercle 5 est conformée en une cuvette, ouverte sur la face inférieure du couvercle 5 et qui se raccorde au rebord 21 en un large congé. Entre la surface inférieure de son bord 13 et le sommet du bossage du rebord 21, le couvercle 5 présente un profil d'allure générale en S. L'emboîtement 17 présente un rayon de courbure supérieur au rayon de courbure du bossage du rebord 21.

La face inférieure du couvercle 5 est dépourvue de surface en contre-dépouille, de la partie la plus basse du rebord 21 à la face supérieure de la portion périphérique 13 du couvercle 5. Le couvercle 5 peut être moulé/pressé dans une position telle que sa face inférieure se trouve dans le moule/matrice, jusqu'à la face supérieure de la portion périphérique 13.

Cette partie du couvercle 5 présente dans le moule ou la matrice est la moins sujette aux dispersions dimensionnelles.

La boîte 1 comprend encore un joint périphérique 25 destiné à assurer un assemblage pratiquement hermétique du couvercle 5 avec la base 3. Le joint 25 est souple, et se trouve par exemple réalisé en silicone. Une dureté du silicone est comprise entre 55 et 75 Shore A, par exemple de 70. Le silicone en question est compatible avec un usage alimentaire et, de préférence, résiste à la chaleur, au moins au réchauffage, notamment au four à micro-ondes.

Ensemble, le joint 25 et le couvercle 5 forment un accessoire 27 pour la base 3. Cet accessoire 27 peut se présenter à l'état assemblé, le joint 25 monté sur le couvercle 5, ou en kit, le joint 25 demeurant à monter sur le couvercle 5. Désassemblé du joint 25, le couvercle 5 peut être utilisé au four traditionnel, à des températures incompatibles avec l'usage d'une pièce en silicone.

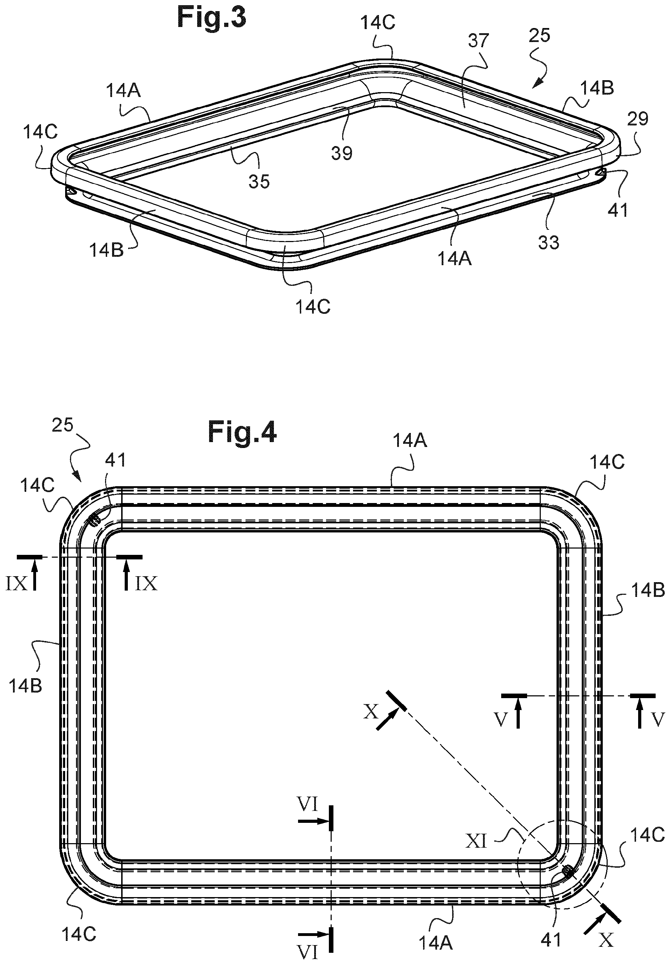

On fait référence aux figures 3 à 7.

Le joint 25 présente une section pratiquement constante le long d'un contour fermé. Le contour du joint 25 correspond au contour du bord 14 du couvercle 5. Ici, ce contour présente une allure généralement rectangulaire, avec une paire de bords longs 14A, une paire de bords courts 14B et quatre coins 14C reliant à chaque fois une extrémité d'un bord long 14A à une extrémité d'un bord court 14B. Le contour du joint 25 correspond au contour du bord supérieur 11 de la base 3. Dans le cas d'une base 3 circulaire par exemple, le contour du joint 25 est également circulaire.

En section transversale, le joint 25 présente une première portion d'extrémité, ou portion d'engagement 29, en correspondance de forme avec le profil de la portion périphérique 13 du couvercle 5, au voisinage du bord 14. Cette correspondance de forme, et son élasticité, permet au joint 25 de se monter sur le couvercle 5, autour de celui-ci, par l'intermédiaire de cette portion d'engagement 29. Cette portion d'engagement 29 du joint 25 vient chausser et entourer le bord 14 du couvercle 5 et la portion périphérique 13 au voisinage de ce bord 14. Ici, cette portion d'engagement 29 forme une portion à profil en U, capable de s'engager de manière ajustée autour d'une portion du couvercle 5 correspondant à la portion périphérique 13 au voisinage du bord 14 du couvercle. On peut également y voir une portion d'engagement 29 conformée en une rainure périphérique de section transversale correspondant à la section transversale du couvercle 5 en sa portion périphérique. Ici, cette portion d'engagement 29 présente un profil généralement carré, ouvert d'un côté interne du joint 25.

En section transversale, le joint 25 présente une seconde portion d'extrémité, ou portion active 31, éloignée de la portion d'engagement 29 et comportant une partie extrême conformée en une lèvre d'étanchéité 33. La portion active 31 est libre de contact ou d'engagement avec le couvercle 5. La lèvre 33 est agencée de manière à coopérer avec la paroi 9 de la base 3, au voisinage du bord 11 de cette base 3, lorsque le couvercle 5 recouvre la base 3, pour créer et maintenir un assemblage pratiquement hermétique du couvercle 5 avec la base 3.

La lèvre 33 occupe une portion d'extrémité libre de la section transversale du joint 25. La lèvre 33 présente un profil généralement rectiligne. La lèvre 33 s'étend généralement de manière parallèle au second plan 16 du couvercle 5 lorsque le joint 25 est enfilé sur le couvercle 5 et le couvercle se trouve hors de la base 3.

La portion active 31 du joint 25 présente en outre une partie de raccordement 35 qui relie la lèvre 33 au reste du joint 25. Ici, cette partie de raccordement 35 présente un profil en forme générale d'arc de cercle.

Le joint 25 présente une portion intermédiaire 37 qui relie la portion d'engagement 29 à portion active 31. Cette portion intermédiaire 37 présente un profil en correspondance de forme avec le profil du contour de l'emboîtement 17 du couvercle 5, à savoir une première portion arquée qui se raccorde à la portion d'engagement 29 et dont le centre de courbure se trouve d'un côté du joint 25 opposé à l'ouverture de la portion d'engagement 29 et un seconde portion arquée, de courbure inverse, qui prolonge la première portion vers le bas. Cette seconde portion arquée présente une forme qui correspond en partie au bossage du bord 21, jusqu'au sommet de celui-ci, au moins.

Lorsque la portion d'engagement 29 est montée sur le bord 13 du couvercle 5, la portion active 31, y compris sa lèvre 33, sont libres. Au contraire, la portion intermédiaire 37 du joint 25 s'ajuste autour de l'emboîtement 17 du couvercle 5, par coopération de forme avec le contour de cet emboîtement 17. Là, un contact étroit entre le joint 25 et le couvercle 5 est réalisé, lequel contribue à maintenir le joint 25 en position sur le couvercle 5. Ce maintien est assuré, y compris en cas de dispersions dimensionnelles importantes sur le couvercle 5, comme ce peut être le cas lorsque ce couvercle 5 est réalisé en verre pressé.

Lorsque le joint 25 est en place sur le couvercle 5 et que ce dernier ne recouvre pas la base 3, la lèvre 33 s'étend généralement de manière parallèle au second plan 16 du couvercle 5.

La portion active 31 et la portion intermédiaire 37 du joint 25 se raccordent l'une à l'autre en une zone 39 du joint 25 qui correspond au sommet du bossage du rebord 21, voire dépasse ce sommet. Il résulte de cette coopération entre la forme du joint 25, notamment en sa portion intermédiaire 37, et celle du couvercle 5, notamment son emboîtement 17, plusieurs effets bénéfiques à l'assemblage du couvercle 5 avec la base 3.

D'abord, la zone 39 du joint 25 forme une articulation de la portion active 31 relativement au reste du joint 25. Cette articulation permet à la portion active 31 de pivoter, en particulier en réaction au contact avec la paroi 9 de la base 3 à la mise en place du couvercle 5. Cette articulation résulte du fait qu'au-dessus de la zone 39, le joint 25 est en contact étroit avec le couvercle 5 tandis qu'à partir zone 39, et vers le bas, le joint 25, y compris sa lèvre 33, est libre de mouvement. Ce fonctionnement est plus efficace et s'accompagne d'une meilleure ergonomie qu'un pincement de lèvre comme le prévoient les produits de l'état de la technique.

En outre, cette zone 39 de pivotement se trouve à la fois éloignée de la paroi latérale 9 du fait de sa présence au niveau de l'emboîtement 17, et du bord 11 de la base 3 du fait de la combinaison de l'emboîtement 17 et du bossage du rebord 21.

Cet éloignement procure à la lèvre 33 une capacité accrue à pivoter par déformation élastique du joint 25, ce dont il résulte une plus grande efficacité du joint 25, y compris en cas de dispersion dimensionnelle du couvercle 5 et de la base 3. La portion de raccordement 35 en forme d'arc de cercle maintient la lèvre 33 encore plus profondément et favorise encore le pivotement de cette dernière. Cet agencement est compatible avec des bases du type de la base 3 avec une dépouille importante.

Lorsque le couvercle 5 ne repose pas sur la base 3, il peut reposer sur une surface plane, par l'intermédiaire de la lèvre 33. Cette lèvre 33 protège le couvercle 5 d'éventuels chocs et l'empêche de glisser sur la surface en question. La portion d'engagement 29 du joint 25 offre une protection similaire au couvercle 5 lorsqu'on fait reposer ce couvercle 5 sur sa face supérieure. En effet, la surface supérieure de la portion périphérique 13 correspond à la surface la plus haute du couvercle 5. Autrement dit, sur la surface supérieure du couvercle 5, la portion périphérique 13 est plus haute que la portion centrale 15, et plus généralement que le reste du couvercle 5.

Pour favoriser encore le pivotement de la portion active 31 du joint 25, on peut réduire légèrement l'épaisseur de cette dernière par rapport au reste du joint 25. Plus cette portion active 31 est épaisse, moins le silicone utilisé est dur. Au contraire, plus cette portion active 31 est fine, plus le silicone utilisé est dur

Lorsque le couvercle 5 est en place sur la base 3, sa portion périphérique 13 repose sur le bord 11 de la base 3 par l'intermédiaire du joint 25, en particulier d'une partie de sa portion d'engagement 29.

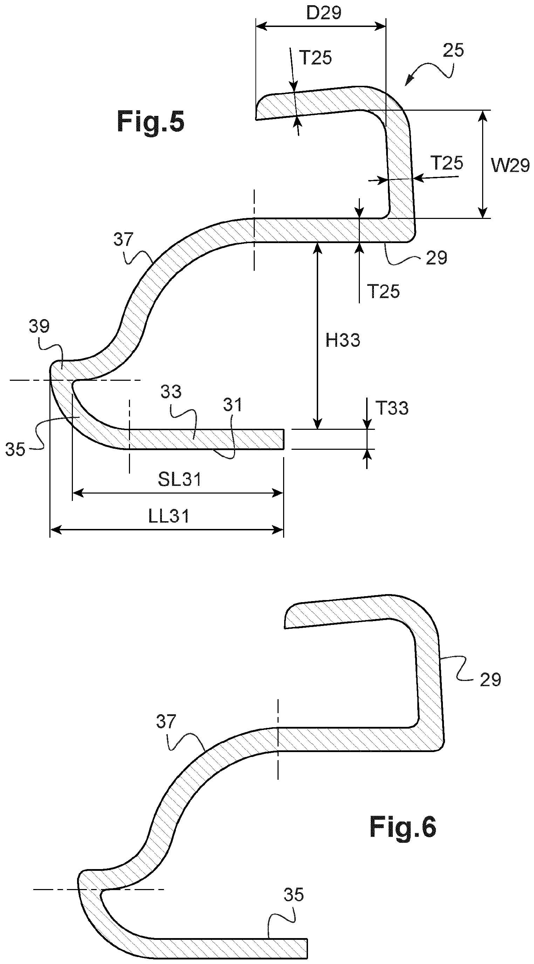

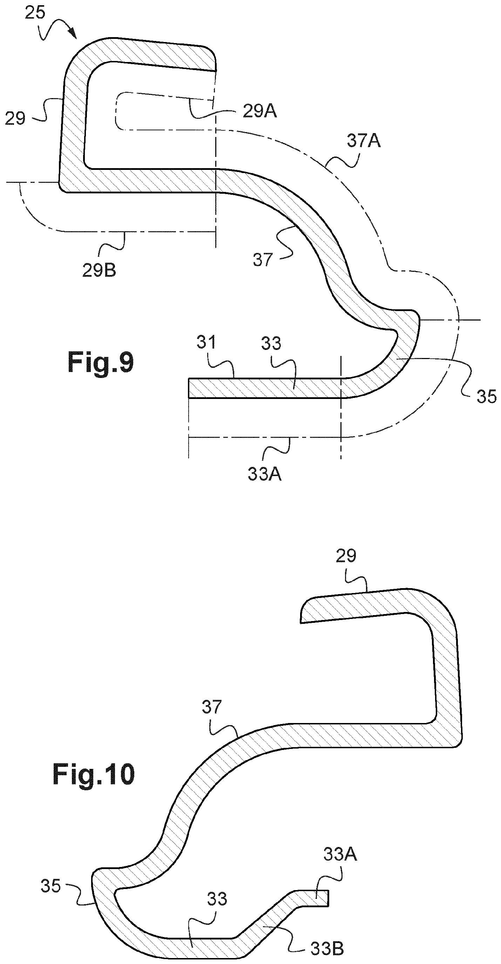

Les figures montrent que le profil du joint 25 est constant sur l'essentiel de son extension, en particulier sur les bords longs 14A (figure 6) et les bords courts (figures 5 et 9).

À titre d'exemple uniquement, on donne les dimensions suivantes, en millimètre :
- l'épaisseur de la portion périphérique 13, au voisinage du bord 14, ou la largeur W29 de la portion d'engagement 29, entre 5 et 6, en particulier entre 5,2 et 5,5 ;
- la profondeur D29 de la portion d'engagement 29, entre 6 et 7, en particulier 6,5 ;
- l'extension SL31 de la partie active 31 du joint 25, sur un côté supérieur, dans une direction parallèle au plan principal du couvercle 5, entre 10,4 et 10,7, en particulier 10,5 ;
- l'extension LL31 de la partie active 31 du joint 25, sur un côté inférieur, dans une direction parallèle au plan principal du couvercle 5, entre 11 et 12, en particulier 11,75 ;
- la distance H33 entre la portion d'engagement 29 et la lèvre 33, en hauteur, entre 9 et 10, en particulier 9,5 ;
- l'épaisseur T25 du joint 25 (hors partie active 31), entre 1 et 1,5, en particulier 1,2 ;
- l'épaisseur T33 de la partie active 31, entre 1 et 1,5, en particulier 1.

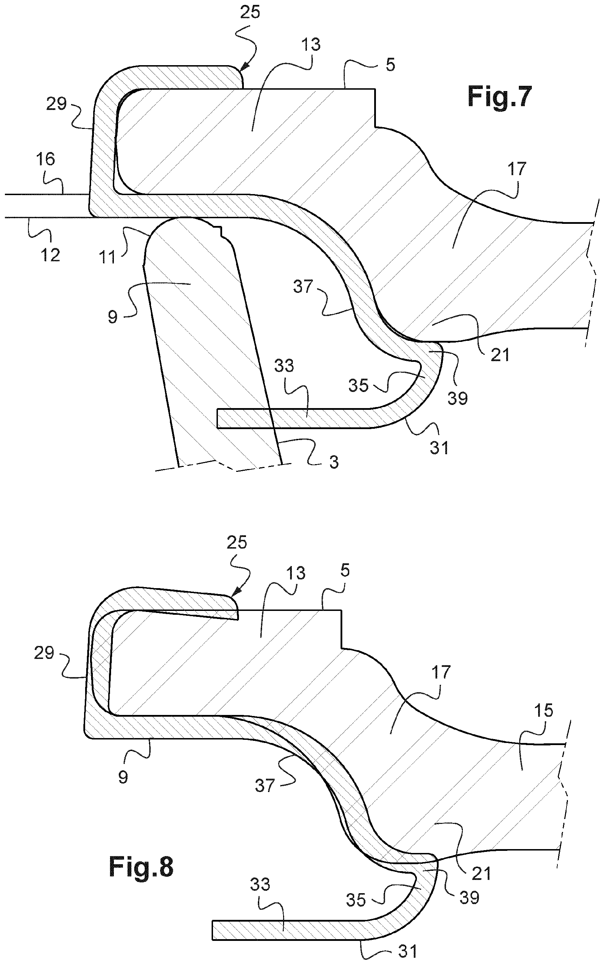

On fait référence à la figure 8.

Pour améliorer la tenue du joint 25 sur la portion périphérique 13 du couvercle 5, ce joint 25 peut être dimensionné avec une certaine interférence relativement au couvercle 5, au moins en certaines portions. Par exemple, cette interférence est de l'ordre de quelques pour cents, par exemple entre 5 et 10 pour cent.

Les portions du joint 25 en interférence dimensionnelle sont représentées comme pénétrant la matière du joint 25.

On trouve d'abord une interférence dimensionnelle sur la portion la plus extrême de la portion d'engagement 29 du joint 25. La section offerte par la rainure formée par cette portion d'engagement 29 est plus étroite que la portion périphérique 13 du couvercle 5 sur lequel cette portion vient s'engager.

Une interférence dimensionnelle supplémentaire se trouve également au fond de cette rainure, laquelle interférence permet d'obtenir un ajustement serré sur la largeur et/ou la longueur du joint 25.

Une interférence dimensionnelle se trouve également sur l'essentiel de la portion intermédiaire 37 en forme S, afin d'assurer un contact étroit entre le joint 25 et le couvercle 5, y compris lorsque la portion active 31 du joint vient à pivoter.

On fait référence à la figure 9.

Pour augmenter l'efficacité de sa partie active 31, certaines parties correspondantes du joint 25 peuvent présenter une modification de la texture de leur surface (état de surface). Cette modification vise à augmenter sensiblement la rugosité de la surface (grain). Cette modification diminue l'adhérence du matériau du joint 25, notamment le silicone, sur le verre qui constitue le couvercle 5 et, de préférence, la base 3. On vise par exemple un état de surface équivalent à Charmilles 38. Cela augmente l'ergonomie de la boîte 1, en particulier à la mise en place du couvercle 5 sur la base 3 et à son retrait.

Les portions du joint 25 modifiées sont représentées en trait mixte. C'est le cas notamment des surfaces des portions du joint 25 en contact avec le couvercle 5 :
- la surface intérieure 29A de la portion d'engagement 29, pour faciliter le retrait du joint 25 du couvercle 5 et éviter que ce joint 25 adhère au couvercle après une longue période sans retrait ;
- la surface intérieure 37A de la portion intermédiaire 37, avec les mêmes objectifs.

C'est également le cas de la surface 31A de la portion active 31, notamment sur la face 33A de la lèvre 33 destinée à venir coopérer avec la paroi 9 de la base 3. Ceci participe au glissement entre la portion active 31 et la paroi 9 qui contribue à l'ergonomie recherchée.

Au surplus, un texturage peut être prévu sur face extérieure 29B de la portion d'engagement 29 en appui contre le bord 11 de la base 3.

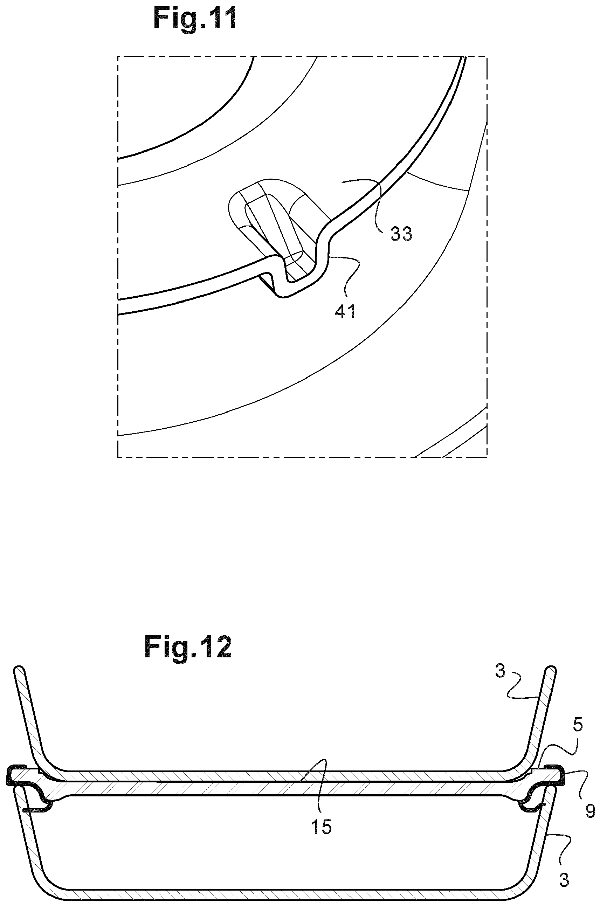

On fait référence aux figures 10 et 11.

En combinant la configuration du joint 25 et du couvercle 5, notamment de son emboîtement 17, on obtient un excellent assemblage du couvercle 5 sur la base 3, notamment en ce qui concerne l'herméticité.

La Demanderesse a constaté qu'il en résulte parfois un engagement du couvercle 5 sur la base 3 tel que le retrait du couvercle 5 de cet engagement peut encore nécessiter un effort un peu excessif, en particulier dans le cas de boîtes de grandes dimensions.

Pour faciliter, le retrait du couvercle 5, on peut conformer localement la lèvre 33 en des zones d'évents. En favorisant un équilibre des pressions à l'intérieur du récipient et à l'extérieur de celui-ci, ces évents favorisent en outre la mise en place du couvercle 5 sur la base 3.

Ici, une paire d'évents 41 est prévue, en des coins 14C centralement opposés du contour de la lèvre 33. Ces évents 41 sont obtenus en relevant une portion d'extrémité libre 33A de la lèvre 33 par rapport au reste de cette lèvre 33, ici grâce à une portion de liaison 33B oblique.

On peut prévoir plus de deux évents du type des évents 41, ou un seul, selon la configuration du couvercle 5. Plus on prévoit d'évents plus l'assemblage et le retrait du couvercle 5 sur la base 3 se trouve facilité, au dépend cependant de l'herméticité de l'assemblage.

La Demanderesse a constaté que deux évents, centralement opposés, offrent un bon compromis.

On fait référence à la figure 12.

La cuvette 15 sur la face supérieure du couvercle 5 est conformée de manière à recevoir le fond 7 d'une base homologue de la base 3 décrite en relation avec les figures 1 et 2 notamment.

L'invention n'est pas limitée aux modes de réalisation décrits plus haut, à titre d'exemple uniquement mais englobe toutes les variantes que pourra envisager l'homme de l'art.

## Revendications

1. Accessoire culinaire (27) du type comprenant un couvercle en verre (5) généralement plat présentant une portion périphérique (13) avec un bord de couvercle (14) et un joint circonférentiel (25) souple comprenant une portion d'engagement (29) chaussée sur une partie de la portion périphérique (13) du couvercle (5) voisine du bord (14), le joint circonférentiel (25) présentant une lèvre d'étanchéité (33) apte à coopérer avec la paroi latérale (9) d'un récipient de base (3) quand le couvercle (5) repose sur un bord supérieur (11) de ce récipient de base (3) par l'intermédiaire de la portion périphérique (13), **caractérisé en ce que** le couvercle (5) présente en outre une portion d'emboîtement (17) en saillie de la portion périphérique (13) et la lèvre d'étanchéité (33) est agencée comme extrémité d'une portion active (31) du joint circonférentiel (25), tandis qu'une portion intermédiaire (37) de ce joint circonférentiel (25), reliant la portion active (31) à la portion d'engagement (29), est conformée de manière à épouser l'emboîtement (17).

2. Accessoire selon la revendication 1, dans lequel l'emboîtement (17) présente un profil généralement concave et la portion intermédiaire (37) du joint circonférentiel (25) présente au moins une partie en correspondance de forme avec le profil de l'emboîtement (17).

3. Accessoire selon l'une des revendications précédentes, dans lequel la portion active (31) du joint circonférentiel (25) est libre tandis que sa portion intermédiaire (37) est en contact serré avec l'emboîtement (17).

4. Accessoire selon l'une des revendications précédentes, dans lequel le couvercle (5) présente une portion centrale munie, sur une face inférieure du couvercle (5), d'au moins un rebord périphérique (21) qui se raccorde à la portion d'emboîtement (17) tandis que la portion intermédiaire (37) du joint circonférentiel (27) est en partie au moins en correspondance de forme avec ce rebord périphérique (21).

5. Accessoire selon la revendication 4, dans lequel le rebord périphérique (21) est conformé en un bossage qui fait saillie de la portion centrale (15) du couvercle (5) et la portion intermédiaire (37) du joint circonférentiel (27) est en correspondance de forme avec ce bossage au moins jusqu'à un sommet de celui-ci.

6. Accessoire selon l'une des revendications précédentes, dans lequel la lèvre d'étanchéité (33) se raccorde à la portion intermédiaire (37) par une portion arquée (35) qui éloigne la lèvre d'étanchéité (33) de l'emboîtement (17).

7. Accessoire selon l'une des revendications précédentes, dans lequel le joint circonférentiel (25) présente au moins une portion à fonction d'évent (41) en tant que déformation locale d'un profil de la lèvre d'étanchéité (33).

8. Accessoire selon l'une des revendications précédentes, dans lequel le joint circonférentiel (25) présente, par parties au moins, une texture rugueuse, en particulier un grain de type Charmille.

9. Accessoire selon la revendication 8, dans lequel la lèvre (33) présente une texture rugueuse, en particulier de grain Charmille 38.

10. Accessoire selon l'une des revendications précédentes, dans lequel au voisinage du bord (14) du couvercle (5) au moins, la portion périphérique (13) dépasse en hauteur le reste du couvercle (5) ou se trouve au niveau de celui-ci.

11. Accessoire selon l'une des revendications précédentes, dans lequel le bord (14) du couvercle (5) déborde de la paroi latérale (9) du récipient de base (3), au moins au voisinage de son bord supérieur (11) lorsque le couvercle (5) repose sur ce bord supérieur (11) par l'intermédiaire de la portion périphérique (13).

12. Kit formant accessoire culinaire (27) du type comprenant un couvercle en verre (5) généralement plat muni d'une portion périphérique (13) avec un bord de couvercle (14) et un joint circonférentiel (25) souple comprenant une portion d'engagement (29) qui se chausse sur une partie de la portion périphérique (13) du couvercle (5) voisine du bord (14), le joint circonférentiel (25) présentant une lèvre d'étanchéité (33) apte à coopérer avec la paroi latérale (9) d'un récipient de base (3) quand le couvercle (5) repose sur un bord supérieur (11) de ce récipient de base (3) par l'intermédiaire de la portion périphérique (13), **caractérisé en ce que** le couvercle (5) présente en outre une portion d'emboîtement (17) en saillie de la portion périphérique (13) et la lèvre d'étanchéité (33) est agencée comme extrémité d'une portion active (31) du joint circonférentiel (25), tandis qu'une portion intermédiaire (37) de ce joint circonférentiel (25), reliant la portion active (31) à la portion d'engagement (29), est conformée de manière à épouser l'emboîtement (17).

13. Boîte de conservation (1) à usage alimentaire du type comprenant un récipient de base (3) avec une paroi latérale (9) et un bord supérieur (11) ainsi qu'un couvercle en verre (5) généralement plat muni d'une portion périphérique (13) avec un bord de couvercle (14) et un joint circonférentiel (25) souple comprenant une portion d'engagement (29) chaussée sur une partie de la portion périphérique (13) du couvercle (5) voisine du bord (14), le joint circonférentiel (25) présentant une lèvre d'étanchéité (33) apte à coopérer avec la paroi latérale (9) du récipient de base (3) quand le couvercle (5) repose sur le bord supérieur (11) de ce récipient de base (3) par l'intermédiaire de la portion périphérique (13), **caractérisé en ce que** le couvercle (5) présente en outre une portion d'emboîtement (17) en saillie de la portion périphérique (13) et la lèvre d'étanchéité (33) est agencée comme extrémité d'une portion active (31) du joint circonférentiel (25), tandis qu'une portion intermédiaire (37) de ce joint circonférentiel (25), reliant la portion active (31) à la portion d'engagement (29), est conformée de manière à épouser l'emboîtement (17).
